(19) Europäisches Patentamt
European Patent Office
Office européen des brevets

(11) **EP 4 674 913 A1**

(12) **EUROPEAN PATENT APPLICATION**

(43) Date of publication:
**07.01.2026 Bulletin 2026/02**

(21) Application number: **24306355.9**

(22) Date of filing: **13.08.2024**

(51) International Patent Classification (IPC):
*C08L 91/00* (2006.01)

(52) Cooperative Patent Classification (CPC):
(C-Sets available)
**C08L 91/00;** C08L 2555/64; C08L 2555/74;
C08L 2555/84                                    (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicants:
• **TotalEnergies OneTech
92400 Courbevoie (FR)**
• **Technische Universiteit Delft
2628 CN Delft (NL)**
• **Latexfalt B.V.
2396 AP  Koudekerk a/d Rijn (NL)**

(72) Inventors:
• **HUNG, Yvong
69360 SOLAIZE (FR)**
• **LIU, Xueyan
2628 DELFT (NL)**
• **LIN, Peng
2628 DELFT (NL)**
• **Hagos, Eyassu
2396 AP KOUDEKERK A/D RIJN (NL)**

(74) Representative: **Lavoix
2, place d'Estienne d'Orves
75441 Paris Cedex 09 (FR)**

(54) **ADDITIVE COMPOSITION FOR REJUVENATING BITUMINOUS COMPOSITION**

(57)    The present invention concerns an additive composition for rejuvenating a polymer-modified bituminous composition, said additive composition comprising:
a) at least one rejuvenating oil;
b) at least one polymer, preferably one elastomer, and more preferably one crosslinked elastomer; and
c) at least one chemical reactive agent carrying at least one functional group chosen from the group consisting of: isocyanate and epoxide functions.

(52) Cooperative Patent Classification (CPC): (Cont.)

C-Sets
**C08L 91/00, C08L 53/02, C08G 18/00;**
**C08L 91/00, C08L 53/02, C08L 91/00**

**Description**

The present invention concerns the field of bituminous material in particular road pavement of the bituminous asphalt type or coatings for buildings such as waterproofing membranes or bituminous shingles. Specifically, the present invention concerns an additive composition for rejuvenating a polymer-modified bituminous composition.

The use of polymers additives in bitumen has been the focus of attention in many research projects. This is because governments and contractors are pushing for the design of more durable and effective pavements while adhering to more sustainable practices. Polymer-modified bitumens (PMB) show a variety of rheological properties, allowing engineers to carefully design binders with a lower thermal sensitivity, increased performance, and longer lifespan. The most used polymer for the modification of bitumen is Styrene Butadiene Styrene (SBS), followed by Styrene Butadiene Rubber (SBR), Ethylene Vinyl Acetate (EVA), and Polyethylene (PE).

The use of SBS for instance is especially popular because it provides both structural strength and remarkable elasticity when blended into bitumen. This is mainly because SBS forms a three-dimensional network of polystyrene nodes crosslinked by polybutadiene chains inside bitumen. The polystyrene nodes consist of multiple styrene heads grouped together by attractive intermolecular forces. The polybutadiene chains, on the other hand, are chemically bonded segments of butadiene. The polystyrene nodes impart structural strength into the network, while the polybutadiene chains provide it with flexibility and elasticity. Scientists focus on preserving the morphology of this network because it largely determines the mechanical response of SBS-modified bitumens (SBSMBs).

Bitumens and PMBs undergo chemical and physical changes that occur during production of pavements and throughout their service life. The impact of aging is often associated with the loss of lighter hydrocarbons from the maltenes fraction in the bitumen phase, resulting in an unstable bitumen mixture. The aging mechanism also involves the rupture of the polymer network within the bitumen. During aging, the chemical bonds in the polymer chains break, resulting in isolated nodes and in a weakened polymeric network. In any case, the impact of aging results in the hardening of the binder, increasing its stiffness, its cracking propensity, and reducing its cohesive strength.

To effectively restore the original rheological properties of aged PMBs, two primary challenges must be addressed. The first challenge involves replenishing the maltenes fraction that diminishes during aging. This can be achieved by adding an appropriate amount and combination of maltenes to restore the colloidal structure of the bitumen phase in PMBs. The second challenge is to reconstruct the polymer network. This can be accomplished in two ways: firstly, by adding a chemical additive to re-establish the chemical bonds in the polybutadiene that were disrupted during aging; and secondly, by introducing a new polymer that leverages the structural advantages of polystyrene nodes, which are clusters of multiple styrene heads held together by attractive intermolecular forces. These strategies together provide a comprehensive approach to counteract the effects of aging and rejuvenate the bituminous composition.

The current commercial rejuvenators are primarily focused on replenishing the diminished maltenes fraction to restore the colloidal structure of the bitumen phase in aged polymer-modified bitumens (PMBs). However, these solutions are inadequate in recovering the polymer network.

Research efforts and patents have explored using chemical additives to re-establish the chemical bonds in polybutadiene that deteriorate during aging. Despite these efforts, these approaches fail to address the loss of maltenes and do not efficiently reconstruct the polymer network, with the recycling process remaining highly complex and inefficient.

There is a noticeable gap in the technology as no rejuvenation method currently exists that can simultaneously supplement maltenes, provide fresh polymer, and re-establish the chemical bonds within polybutadiene. Moreover, the application process for such rejuvenation methods poses significant challenges. Developing a sequence of steps that can independently and thoroughly address each aging mechanism is exceptionally difficult, highlighting the need for innovative approaches that can offer holistic solutions to effectively counteract the aging of PMBs and simplify the implementation process.

Thus, there is a need to find a new additive composition that fully restores the mechanical properties of a polymer-modified bituminous composition.

Moreover, there is a need to find a new method to reverse the impact of aging by fully restoring both the chemical and physical integrity of the affected polymeric network and reestablishing the maltenes fraction required to obtain a stable bituminous material. There is a need to find a new method able to tackle the different aging mechanisms in one.

Thus, there is a need to find a new additive composition that fully restores the mechanical properties of a polymer-modified bituminous composition.

The present invention fulfils these needs.

The present invention concerns an additive composition for rejuvenating a polymer-modified bituminous composition, said additive composition comprising:

a) at least one rejuvenating oil;
b) at least one polymer, preferably one elastomer, and more preferably one crosslinked elastomer; and
c) at least one chemical reactive agent carrying at least one functional group chosen from the group consisting of

isocyanate and epoxide functions.

Indeed, the inventors have surprisingly discovered that it is possible to restore the mechanical properties of a polymer-modified bituminous composition by incorporating this specific additive composition with the aged bituminous composition.

Within the present application, the term "binder" refers to a combination of bitumen and, optionally, other components. The other components could include elastomers, non-bituminous binders, adhesion promoters, softening agents, or other suitable additives.

The term "polymer-modified bituminous composition" refers to a combination of bitumen and at least one polymer, optionally other components. Precisely, it concerns a bituminous binder comprising at least one polymer.

The term "rejuvenating composition or agent" as used herein refers to compositions or chemical compounds that are mixed in appropriate manner with aged bitumen and which allow to restore the property of aged bitumen close to those of fresh bitumen.

The term "virgin bitumen" (also known as "fresh bitumen") refers to bitumen that has not been used, precisely bitumen which has not already been contacted with aggregates for the preparation of asphalt mixes.

The term "aged bituminous composition" or "aged bitumen", refers to bituminous composition, which have already been extensively used in asphalt compositions. Precisely, it means bitumen that is contained in or obtained from reclaimed asphalt and is referred to as bitumen of reclaimed asphalt origin. The aged bituminous composition may comprise a polymer.

*Rejuvenating oil*

The additive composition according to the invention comprises at least one rejuvenating oil.

"Rejuvenating oil" refers to an oil used in the bitumen or asphalt rejuvenation process, aimed at restoring the deteriorated rheological and chemical properties of bituminous compositions.

Additionally, the oil allows to decrease the viscosity of aged bitumen, maintaining a viscosity less than 0.5 Pa.s at 60 degrees Celsius. The primary objective is to comprehensively recover the colloidal structure of the bitumen and improve the compatibility between the polymer and bitumen phases.

Preferably, the rejuvenating oil according to the invention is chosen from the group consisting of:

i) natural oils, possibly modified or functionalized;
ii) mineral hydrocarbon oils, in particular petroleum-based, or synthetic hydrocarbon oils; and
iii) mixtures of i) and ii).

By "natural oil", it is meant an oil derived from living organisms. Natural oils can include plant-based oil, extracted from plants, animal or algae-based oil, said oils being refined or unrefined.

By "hydrocarbon oil", it is meant an oil mainly composed of hydrocarbon compounds, i.e. made up almost exclusively of carbon and/or hydrogen atoms. Hydrocarbon oils may also contain heteroatoms, in particular oxygen, nitrogen or sulphur, but in very small quantities.

By "petroleum-based hydrocarbon oil", it is meant an oil produced by refining crude petroleum, in particular by distilling crude petroleum. The petroleum fraction may require further additional steps such as purification steps, extraction steps or dearomatisation steps.

By "synthetic hydrocarbon oil", it is meant an oil obtained by complex chemical modifications carried out either directly on crude petroleum or on pre-selected molecules contained in crude petroleum. Synthetic oils therefore differ from petroleum-based oils by a conversion process leading to significant chemical modifications.

According to one embodiment, the composition according to the invention comprises at least one natural oil, said oil being eventually modified or functionalized.

Preferably, the rejuvenating oil according to the invention contains at least 20% of aromatic components. Without being bound to any theories, the presence of at least 20% aromatic compounds in the rejuvenating oil enhances the compatibility between the polymer and the bitumen phase.

Preferably, the rejuvenating oil is a natural oil chosen from the group consisting of plant-based oils, animal-based oils, tall oils, and mixtures thereof.

Plant-based oils include, but are not limited to, oils isolated from plants, in particular oils obtained by simple extraction from material of vegetable origin, such as soya oil, linseed oil, canola oil, rapeseed oil, castor oil, cottonseed oil, sunflower oil, palm oil, peanut oil, caraway oil, safflower oil, corn oil, corn waste oil, lecithin (phospholipids), as well as their combinations.

Plant-based oils also include oils obtained from products or residues resulting from the conversion of raw materials of vegetable origin, such as tall oil compounds.

Crude Tall Oil is a by-product resulting from the conversion of wood into pulp, also known as the Kraft process. Distillation of crude tall oil yields a volatile, highly saturated fraction of long-chain fatty acids (mainly palmitic acid), also called "tall oil heads". The next fraction is composed of tall oil fatty acids (or TOFA). This TOFA fraction consists mainly of $C_{18}$ and $C_{20}$ fatty acids with varying degrees of unsaturation (e.g. oleic acid, linoleic acid, linolenic acid and various isomers thereof). Another fraction, known as distilled tall oil (DTO), is a mixture of mainly tall oil fatty acids and a smaller proportion of tall oil rosin. The tall oil rosin (or TOR for Tall Oil Rosin), which is then isolated, consists largely of a $C_{19}$-$C_{20}$ tricyclic monocarboxylic acid. The lower distillation cut is known as tall oil pitch.

Examples of oils of animal origin may include, but are not limited to, animal fat (e.g. lard, tallow) and lecithin (phospholipids), as well as combinations thereof.

Natural oils can also include partially hydrogenated oils, oils with conjugated bonds, and body oils in which a heteroatom is not introduced, for example, but not limited to, diglycerides, monoglycerides, free fatty acids, fatty acid alkyl esters (e.g. methyl, ethyl, propyl and butyl), diol and triol esters (e.g. ethylene glycol, propylene glycol, butylene glycol, trimethylolpropane), and mixtures thereof. An example of a natural oil is waste cooking oil or other used oils.

Natural oils may have been modified or functionalized.

As an example of modified natural oils, one may cite natural oils which have been vulcanized or polymerized, specifically by polymerisation with sulphur or by treatment with maleic anhydride or modified acrylic acid; hydrogenated; modified with dicyclopentadiene; conjugated by reaction with iodine; esterified, especially inter-esterified; treated to modify the acid number, hydroxyl number or any other property. Some examples of modified oils are polyol esters, for example polyglycerol ester or castor oil ester, or estolides. These modified oils can be mixed with unmodified vegetable or animal oils, fatty acids, glycerin and/or lecithin.

As an example of functionalized natural oils, one may cite natural oils modified by the introduction of an heteroatom such as oxygen, nitrogen, sulphur or phosphorus.

Advantageously, the natural oil is chosen from plant-based oils, possibly modified or functionalized.

Preferably, the natural oil is chosen from the group consisting of rapeseed oil, tall oils, Sunflower Oil, Soybean Oil, Corn Oil, nutshell oil, and mixtures thereof.

According to one embodiment, the natural oil of the invention is chosen from tall oils and its derivatives. Preferably, according to this embodiment, the tall oil is obtained directly from the distillation of crude tall oil.

Preferably, the natural oil is chosen from: crude tall oil, crude tall oil fractions and any one of the mixtures of tall oil fractions.

More preferably, the natural oil is chosen from tall oil fractions, in particular from : "tall oil heads", tall oil fatty acids (TOFA), distilled tall oil (DTO), tall oil rosin (TOR), and tall oil pitch.

Even more preferably, the natural oil is chosen from tall oil pitch.

The tall oil pitch is referred under CAS No. 8016-81-7. It is in the form of a complex mixture comprising mainly fatty acids such as palmitic acid, linoleic acid and oleic acid; fatty acid esters; resin acids such as abietic acid and its isomers, pimaric acid, isopimaric acid and sandaracopimaric acid; resin acid esters; diterpenic alcohols; fatty alcohols and sterols.

Preferably, the tall oil pitch comprises:

- up to 30% by weight of free fatty acids,
- from 15% to 20% by weight of diglycerides,
- from 50% to 60% by weight of triglycerides, and
- 10% to 15% by weight of sterols,

in relation to the total mass of the pitch.

Preferably, the natural oil is chosen from the tall oil derivatives.

Tall oil derivatives include, in particular, acid-function derivatives such as monomeric, dimeric and trimeric acids obtained from tall oil fatty acids, dimerised rosin acids and refined fatty acids obtainable from tall oil.

Advantageously, the natural oil of the invention is chosen from esterified, optionally polymerized, tall oil.

According to one embodiment, the additive composition comprises a rejuvenating oil chosen from petroleum-based or synthetic hydrocarbon oil.

The hydrocarbon oil may be aromatic or paraffinic.

According to an embodiment, the rejuvenating oil is a petroleum-based or synthetic hydrocarbon oil chosen from the aromatic mineral oils.

Preferably, the aromatic mineral oil has a content in aromatic compounds, according to the standard ASTM D2007, ranging from 30% to 100%, advantageously from 50% to 99%, more advantageously from 60% to 98% by weight relative to the total weight of the aromatic oil.

Preferably, the aromatic mineral oil has a content in saturated compounds, according to the standard ASTM D2007, ranging from 0% to 30%, advantageously from 0,1% to 25%, more advantageously from 0,5% to 23% by weight relative to the total weight of the aromatic oil.

Preferably, the aromatic mineral oil has a content in resinous compounds, according to the standard ASTM D2007, ranging from 0% to 10%, advantageously from 0.1% to 5% by weight relative to the total weight of the aromatic oil.

Preferably, the aromatic mineral oil has a kinematic viscosity at 100°C, according to the standard ASTM D445, ranging from 0.1 $mm^2/s$ and 150 $mm^2/s$, advantageously between 5 $mm^2/s$ and 120 $mm^2/s$.

Preferably, the aromatic mineral oil has a cinematic viscosity at 40°C, according to the standard ASTM D445, ranging from 10 $mm^2/s$ and 2500 $mm^2/s$, advantageously between 30 $mm^2/s$ and 2400 $mm^2/s$.

According to an embodiment, the rejuvenating oil is an aromatic petroleum-based oil.

Preferably, the rejuvenating oil comprises aromatic extracts of petroleum residues, obtained by extraction or dearomatisation of petroleum fractions residues.

The aromatic extracts are classified into different categories according to their manufacturing process:

- DAE (Distillate Aromatic Extract);
- MES (Mild Extract Solvate);
- TDAE (Treated Distillate Aromatic Extract);
- RAE (Residual Aromatic Extract); or
- TRAE (Treated Residual Aromatic Extract).

The contents of naphthenic, paraffinic and aromatic compounds mentioned in the present application are determined according to the standard ASTM D2140, in % by mass relative to the mass of the oil.

Preferably, the petroleum-based aromatic oil has a total paraffinic compound content of between 35% and 65%, preferably between 40% and 60%, for example between 45% and 58%.

Preferably, the petroleum-based aromatic oil has a total content of naphthenic compounds between 10% and 40%, and in particular between 15% and 35%, preferably between 20% and 30%.

Preferably, the petroleum-based aromatic oil has a total aromatic compound content of between 10% and 40%, and in particular between 15% and 35%, for example between 18% and 30%.

More preferably, the petroleum-based aromatic oil has a kinematic viscosity at 100°C of between 0.1 $mm^2/s$ and 150 $mm^2/s$, advantageously between 5 $mm^2/s$ and 120 $mm^2/s$, more advantageously between 7 $mm^2/s$ and 90 $mm^2/s$ (ASTM D 445 Method).

More preferably, the petroleum-based aromatic oil has a kinematic viscosity at 40°C of between 100 $mm^2/s$ and 2500 $mm^2/s$, advantageously between 200 $mm^2/s$ and 2400 $mm^2/s$, more advantageously between 400 $mm^2/s$ and 2250 $mm^2/s$ (ASTM D 445 Method).

More preferably, the petroleum-based aromatic oil origin has a Cleveland flash point greater than or equal to 150°C, advantageously between 150°C and 600°C, more advantageously between 200°C and 400°C (EN ISO 2592 method).

More preferably, the petroleum-based aromatic oil has an aniline point between 20°C and 120°C, advantageously between 40°C and 120°C (ASTM D611 method).

More preferably, the petroleum-based aromatic oil has a density at 15°C of between 400 $kg/m^3$ and 1500 $kg/m^3$, advantageously between 600 $kg/m^3$ and 1200 $kg/m^3$, more advantageously between 800 $kg/m^3$ and 1100 $kg/m^3$ (ASTM Method D4052).

According to a particular embodiment, the aromatic petroleum-based oil has a total content of aromatic compounds according to the standard ASTM D2140, between 10% and 40%, preferably between 35% and 65%, and more preferably between 10% and 40%, the contents being given by weight, relative to the total weight of the oil, said oil has a kinematic viscosity at 100°C, according to the standard ASTM D445, ranging from 40 $mm^2/s$ to 90 $mm^2/s$, and an aniline point, according to the standard ASTM D611, ranging from 45°C to 95°C.

Specifically, "RAE oils" are derived from extraction of the raffinate used in lubricants using a polar solvent.

However, oils obtained by a process other than the RAE process, but having the same physicochemical characteristics and composition, also fall within the scope of the invention.

In the present application, "RAE oil" is taken to mean an oil defined both by its aromatic, paraffinic and naphthenic compound content, by its viscosity at 100°C and by its aniline point as defined above in the context of this first embodiment. Further preferred characteristics of these oils are reported below.

The contents of paraffinic, naphthenic and aromatic compounds mentioned in the present application are determined in accordance with ASTM D2140, in % by mass relative to the total mass of the oil.

The RAE oils used in the context of the invention have a total paraffinic compound content of between 35% and 65%, preferably between 37% and 60%, for example between 40% and 55%.

RAE oils used in the context of the invention have a total naphthenic compound content of between 10% and 40%, and in particular between 15% and 35%, preferably between 20% and 30%.

The RAE oils used in the context of the invention have a total aromatic compound content of between 10% and 40%, and in particular between 15% and 35%, for example between 25% and 30%.

In a preferred embodiment, the RAE oil is chosen from those comprising:

-    a total paraffinic content of between 37% and 60%;
-    a total naphthenic content of between 15% and 35%; and
-    a total aromatic content of between 15% and 35%.

In a more particularly preferred embodiment, the RAE oil is selected from those comprising:

-    a total paraffinic content of between 40% and 55%;
-    a total naphthenic content of between 20% and 30%; and
-    a total aromatic content of between 25% and 35%.

The RAE oils used in the context of the invention have a kinematic viscosity at 100°C of between 40 and 90 $mm^2/s$, more advantageously between 45 and 85 $mm^2/s$ (ASTM D 445 Method).

Preferably, the RAE oils used in the context of the invention have a kinematic viscosity at 40°C of between 1000 and 2500 $mm^2/s$, more advantageously between 1200 and 2500 $mm^2/s$ (ASTM D 445 Method).

The RAE oils used in the context of the invention have an aniline point of between 45°C and 95°C, more advantageously between 50°C and 75°C (ASTM D611 method).

Preferably, the RAE oils used in the context of the invention have a Cleveland flash point greater than or equal to 200°C, advantageously between 200°C and 600°C, more advantageously between 220°C and 400°C, even better, between 220°C and 250°C (ASTM Method D92).

More preferably, the RAE oils used in the invention have a density at 15°C of between 400 $kg/m^3$ and 1500 $kg/m^3$, advantageously between 600 $kg/m^3$ and 1200 $kg/m^3$, more advantageously between 800 $kg/m^3$ and 1100 $kg/m^3$ (ASTM Method D4052).

For example, a RAE oil that can be used in the context of the invention is a product marketed by TotalEnergies under the name REGENIS® 50.

The respective contents of paraffinic, naphthenic and aromatic compounds depend to some extent on the nature of the crude oil from which the oils originate and the refining process used.

For example, REGENIS® 50 is a RAE (Residual Aromatic Extract) with:

-    a density at 15°C of between 980 $kg/m^3$ and 1010 kg $m^3$ (ASTM Method D4052),
-    a flash point (Cleveland) of around 230°C (EN ISO 2592 method),
-    a kinematic viscosity at 100°C of between 60 and 85 $mm^2/s$ (ASTM Method D 445),
-    an aniline point of between 53 and 65°C (ASTM Method D611).

According to one embodiment, the aromatic oil has a total content of aromatic compounds of between 10% and 40%, a total content of paraffinic compounds of between 35% and 65%, a total content of naphthenic compounds of between 10% and 40%, the contents being given by mass, in relation to the total mass of the oil, and measured by the ASTM D2140 method, said oil having a kinematic viscosity at 100°C, measured by the ASTM D445 method, ranging from 15 $mm^2/s$ to 40 $mm^2/s$, and an aniline point, measured by the ASTM D611 method, ranging from 50°C to 80°C.

These oils according to this embodiment result from a double extraction of the raffinate that can be used in lubricants, using a polar solvent, and are hereinafter referred to as "TDAE oil". However, oils obtained by a different process, but having the same physicochemical characteristics and composition, also fall within the scope of the invention.

In the present application, "TDAE oil" is taken to mean an oil defined both by its aromatic, paraffinic and naphthenic compound content, by its viscosity at 100°C and by its aniline point as defined above in the context of this first embodiment. Further preferred characteristics of these oils are reported below.

The contents of paraffinic, naphthenic and aromatic compounds mentioned in the present application are determined in accordance with ASTM D2140, in % by mass relative to the total mass of the oil.

The TDAE oils used in the context of the invention have a content in parrafinic compound ranging between 35% and 65%, preferably between 40% and 60%, for example between 45% and 55%.

The TDAE oils used in the context of the invention have a content in naphtenic compound ranging between 10% and 40%, and in particular between 15% and 35%, preferably between 20% and 30%.

The TDAE oils used in the context of the invention have a content in aromatic ranging between 10% and 40%, and in particular between 15% and 35%, for example between 20% and 25%.

In a preferred embodiment, the TDAE oil is selected from those comprising:

-    a total paraffinic content of between 40% and 60%;
-    a total naphthenic content of between 15% and 35%; and

- a total aromatic content of between 15% and 35%.

In a more particularly preferred mode, the TDAE oil is selected from those comprising:

- a total paraffinic content of between 45% and 55%;
- a total naphthenic content of between 20% and 30%; and
- a total aromatic content of between 20% and 25%.

The TDAE oils used in the context of the invention have a kinematic viscosity at 100°C of between 15 and 40 mm2/s, more advantageously between 16 and 30 mm2/s (ASTM D 445 method).
Preferably, the TDAE oils used in the context of the invention have a kinematic viscosity at 40°C of between 300 and 600 mm$^2$/s, more advantageously between 400 and 550 mm$^2$/s (ASTM D 445 Method).
The TDAE oils used in the context of the invention have an aniline point between 50°C and 80°C, more advantageously between 60°C and 70°C (ASTM D611 Method).
Preferably, the TDAE oils used in the context of the invention have a Cleveland flash point greater than or equal to 200°C, advantageously between 200°C and 600°C, more advantageously between 220°C and 400°C, even better, between 250°C and 300°C (ASTM Method D92).
More preferably, the TDAE oils used in the context of the invention have a density at 15°C of between 400 kg/m$^3$ and 1500 kg/m$^3$, advantageously between 600 kg/m$^3$ and 1200 kg/m$^3$, more advantageously between 800 kg/m$^3$ and 1100 kg/m$^3$ (ASTM Method D4052).
For example, a TDAE oil in the context of the invention may be a product marketed by TotalEnergies under the name: Plaxolène TD346 ®.
The respective contents of paraffinic, naphthenic and aromatic compounds depend to some extent on the nature of the crude oil from which the oils originate and the refining process used.
For example, Plaxolene TD346 ® is a TDAE (Treated Distillate Aromatic Extract) oil with :

- a density at 15°C of between 940 kg/m$^3$ and 970 kg/m$^3$ (ASTM Method D4052),
- a flash point (Cleveland) of around 260 to 280°C (ASTM Method D92),
- a kinematic viscosity at 100°C of between 16 and 23 mm$^2$/s (ASTM Method D 445),
- an aniline point between 64°C and 72°C (ASTM Method D611).

According to one embodiment, the rejuvenating oil is a synthetic aromatic mineral oil.
Preferably, the synthetic aromatic mineral oil is chosen from (poly)condensed alkyl aromatics.
By "poly(condensed) alkyl aromatics", it is meant aromatic hydrocarbon compounds comprising at least two condensed aromatic rings.
Preferably, the synthetic aromatic mineral oil is chosen from polycyclic alkyl aromatics comprising from 2 to 6 condensed aromatic rings, more preferably from 2 to 4 condensed aromatic rings, typically 2 condensed aromatic rings.
More preferably, according to this embodiment, the synthetic aromatic mineral oil is chosen from naphthalene, its derivatives and mixtures thereof.
By "naphthalene derivatives", it is meant any compound obtained from naphthalene by at least one chemical reaction without significantly modifying the intrinsic properties of naphthalene. Examples include addition reactions, such as alkylation, substitution reactions or even grafting reactions.
Advantageously, the synthetic aromatic mineral oil is chosen from naphthalene derivatives obtained by one or more addition reaction(s).
More advantageously, the synthetic aromatic mineral oil is chosen from naphthalenes substituted by at least one hydrocarbon group, preferably chosen from alkyl groups, alkenyl groups and aryl groups.
More advantageously, the synthetic aromatic mineral oil is chosen from naphthalenes substituted by at least one alkyl group, preferably from 1 to 5 alkyl groups, more preferably from 1 to 4 alkyl groups.
Preferably, the synthetic aromatic mineral oil comprises, preferably consists of, a mixture of naphthalene compounds substituted by a single alkyl group (monosubstituted alkyl naphthalene compounds), naphthalene compounds substituted by two alkyl groups (di-substituted alkyl naphthalene compounds), naphthalene compounds substituted by three alkyl groups (tri-substituted alkyl naphthalene compounds), and naphthalene compounds substituted by four alkyl groups (tetra-substituted alkyl naphthalene compounds), wherein the alkyl substituents of the various alkyl naphthalene compounds may be identical or different.
Advantageously, the synthetic aromatic mineral oil consists mainly of tri-substituted alkyl naphthalene compounds.
Advantageously, the synthetic aromatic mineral oil consists mainly of tri-substituted alkyl naphthalene compounds.

More advantageously, the synthetic aromatic mineral oil comprises, preferably consists of:

- from 1% to 20% by mass of monosubstituted alkyl naphthalene compounds,
- from 20% to 50% by mass of di-substituted alkyl naphthalene compounds,
- from 40% to 60% by weight of tri-substituted alkyl naphthalene compounds, and
- from 5% to 15% by weight of tetra-substituted alkyl naphthalene compounds.

The degree of substitution of the alkyl naphthalene compounds, as well as the proportion of mono-, di-, tri- and tetra-substituted compounds can be measured by any known method, typically by gas chromatography.

An alkyl substituent may be a linear or branched alkyl substituent having from 1 to 30 carbon atoms, preferably from 1 to 20 carbon atoms, more particularly from 10 to 15 carbon atoms.

Preferably, the aromatic oil of synthetic origin has an average molecular mass, determined by 1H NMR, ranging from 100 g.mol$^{-1}$ to 1000 g.mol$^{-1}$, more preferably from 250 g.mol$^{-1}$ to 750 g.mol$^{-1}$, even more preferably from 500 g.mol$^{-1}$ to 600 g.mol$^{-1}$.

According to an embodiment, the additive composition according to the invention comprises at least one natural oil and at least one petroleum-based or synthetic hydrocarbon oil.

According to an embodiment, the weight ratio between the petroleum-based or synthetic hydrocarbon oil and the natural oil in the additive composition, is from 1.00:6.77 to 1.00:1.43, preferably from 1.00:4.00 to 1,00:2.22, and more preferably from 1.00:2.86 to 1.00:2.50.

Preferably, the content of natural oil in the composition according to the invention is from 30 % to 70% by weight, preferably from 40% to 65% by weight, and more preferably from 55% to 65% by weight, in relation to the total weight of said additive composition.

Preferably, the content of the petroleum-based or synthetic hydrocarbon oil in the composition according to the invention is from 10% to 50% by weight, preferably from 15% to 45% by weight, more preferably from 15% to 25% by weight, in relation to the total weight of said additive composition.

According to one embodiment, the additive composition according to the invention comprises further components such as for example terpenes or resin.

Preferably, the additive composition according to the invention comprises at least one compound chosen from the terpenes.

By "terpene", it is meant a class of natural products consisting of unsaturated hydrocarbon compounds, linear or cyclic, with the formula $(C_5H_8)_n$, wherein n is from 1 to 10, preferably from 2 to 8.

As an example of terpenes, one may cite compounds such as ocimene, limonene, $\alpha$-pinene, $\beta$-pinene, (-)-menthol, and turbentine.

Preferably, the additive composition according to the invention comprises at least one terpene selected from the group consisting of turbentine, $\alpha$-pinene, $\beta$-pinene, and mixtures thereof.

Preferably, the content of terpene(s) in the composition according to the invention is less than 2% by weight, preferably from 0.2% to 0.7% by weight and more preferably from 0.35% to 0.50% by weight, in relation to the total weight of said additive composition.

Additionally, the introduction of a resin as described above can enhance the compatibility between polymer and the oil phase.

Preferably, the additive composition according to the invention comprises at least one resin.

By "resin", it is meant an hydrocarbon Oil Resin preferably chosen among C5 petroleum based resins and the petroleum based resins.

C5 petroleum-based resins are derived from by-products of petroleum naphtha cracking and are primarily composed of C5 hydrocarbons, such as cyclopentadienes and pentenes. In contrast, C9 resins are produced from the C9+ fraction of aromatic hydrocarbons from petroleum cracking and contain a complex mixture of hydrocarbons, including indenes and methylindenes.

Additionally, the introduction of a resin as described above can enhance the compatibility and reduce the risk of segregation of the polymer in the rejuvenator.

Preferably, the content of resin(s) in the composition according to the invention is less than 2% by weight, preferably from 0.2% to 1% by weight and more preferably from in relation to the total weight of said additive composition.

*Chemical reactive agent*

The additive composition according to the invention comprises at least one chemical reactive agent carrying at least one functional group chosen from the group consisting of: isocyanate and epoxide functions.

Specifically, the chemical reactive agent according to the invention is a cross-linking agent used to restore the chemical bond in the polymer network.

By "isocyanate", it is meant any chemical reactive agent carrying at least an -NCO functionality.

By "one chemical reactive compound carrying an urethane function", it is meant any chemical compound carrying at least a -N(C=O)-O- function.

According to one embodiment, the chemical reactive agent is carrying an epoxide function.

Preferably, the chemical reactive agent is chosen from the oils with an epoxide function.

Oils with epoxide functional functions include, but are not limited to, the epoxidized vegetable oils, the epoxidized fatty acids, the epoxidized triglycerides and/or the epoxidized fatty esters.

Preferably, the oils with epoxide function is selected from the group consisting of sub-epoxidized vegetable oils, sub-epoxidized fatty acids, and sub-epoxidized fatty esters.

In another embodiment, the epoxidized vegetable oils, the epoxidized fatty acids, and/or the epoxidized fatty esters is selected from the group consisting of fully epoxidized fatty acids and fully epoxidized fatty esters.

Suitable epoxidized vegetable oils, epoxidized fatty acids, and epoxidized fatty esters according to the present application include, but are not limited to, epoxidized methyl soyate, epoxidized benzyl soyate, epoxidized soybean oil, epoxidized isoamyl soyate, and epoxidized corn oil. The fatty acid esters may also include, for example, epoxidized methyl linoleate; benzyl, ethyl, fusel oil, furanoic alcohols (tetrahydro-2-furanm ethanol and 2-furanmethanol), glycidol, SBO TAG, DAG, MAG, glycols, and blown oils such as the above-mentioned linseed oil, rapeseed oil, castor oil and soybean oil.

Preferably, according to this embodiment, the chemical reactive agent is chosen from epoxidized soybean oil.

Preferably, the chemical reactive agent is chosen from aromatic isocyanates or polyisocyanates.

Suitable examples of aromatic isocyanates include isomers of toluene diisocyanate, naphthalene 1,5-diisocyanate, naphthalene 1,4-diisocyanate, diphenylmethane 4,4'-diisocyanate, diphenylmethane 2,4'-diisocyanate and mixtures of 4,4'-diphenylmethane diisocyanate with the 2,4' isomer, hydrogenated xylylene diisocyanate, 4,4'- diphenyl-dimethylmethane diisocyanate, di- and tetraalkyl-diphenylmethane diisocyanates, 4,4'-dibenzyl diisocyanate, 1,3-phenylene diisocyanate, triphenylmethane triisocyanate, 1,4-phenylene diisocyanate, or combinations thereof.

Preferably, the chemical reactive agent is an isocyanic acid, polymethylenepolyphenylene ester.

*Polymer*

The additive composition according to the invention comprises at least one polymer, preferably at least one elastomer, more preferably one crosslinked elastomer.

According to a preferred embodiment, the polymer or elastomer is a fresh polymer.

By "fresh polymer" it is meant in the context of the invention that the polymer was not already used in a bituminous composition.

Such elastomers are well known in the art and are generally rubbery polymers. In a preferred embodiment, the elastomer comprises styrene butadiene styrene (SBS), hydrogenated SBS, styrene isoprene styrene (SIS), styrene ethylene butadiene styrene (SEBS) and/or polyisobutadiene (PIB).

Preferably, the polymer according to the invention is chosen from the copolymers of a monovinyl aromatic hydrocarbon and a conjugated diene.

Preferably, the elastomer is chosen from block copolymers of formula S-B-S, in which:

- each S, which may be identical or different, independently represents a block based on monovinyl aromatic hydrocarbon monomers,
- B represents a block based on butadiene monomers, said B block comprising pendant vinyl groups.

According to the invention, the term "block" means a polymeric chain obtained by polymerisation of one or more monomers of the same chemical nature. A block advantageously consists of the repetition of the same monomer.

Specifically, the S blocks together represent at least 15 mol% of the total number of moles of monomer units in the block copolymer. The said block copolymers have an average molecular weight ranging from 40,000 to 500,000 g/mol and have a content of vinyl groups contained in the B block which is greater than or equal to 20 mol%, relative to the total number of moles of monomer units in the block copolymer. These copolymers may hereafter be referred to more simply as SBS elastomers. In general, the two S blocks of the thermocrosslinkable SBS elastomer are identical.

According to the invention, butadiene means 1,3-butadiene, which is a conjugated diene. When butadiene, or more generally a conjugated diene, is polymerised via a 1,2-addition mechanism, the result is a vinyl group (also known as a vinylic group) pendant from the polymer backbone. The pendant vinyl groups in the SBS block copolymer therefore correspond to the 1,2-addition polymerisation of the conjugated diene monomers, and in particular the majority butadiene monomers, within the B block. The units obtained by the polymerisation of butadiene according to a 1,2-addition mechanism or according to a 1,4-addition mechanism have the same molar mass.

Particularly, the monovinyl aromatic hydrocarbon monomer or monomers present in the S blocks of the thermocrosslinkable SBS elastomer are chosen from the group consisting of: styrene, o-methylstyrene, p-methylstyrene, p-tert-butylstyrene, 2,4-dimethylstyrene, alpha-methylstyrene, vinylnaphthalene, vinyltoluene, vinylxylene, and mixtures thereof. The preferred monovinyl aromatic hydrocarbon monomer according to the invention is styrene, which is used, for the constitution of the S blocks as the only monomer, or as the majority monomer in mixtures with minor proportions of one or more other monomers such as o-methylstyrene, p-methylstyrene, p-tert-butylstyrene, 2,4-dimethylstyrene, alpha-methylstyrene, vinylnaphthalene, vinyltoluene and vinylxylene, namely in proportions of at most 10% by mass, relative to the total monovinyl aromatic hydrocarbon monomers present in the said S blocks. The use of styrene as the only monomer is particularly preferred in the present invention for the constitution of the S blocks of the SBS elastomer. Thus, the monovinylaromatic hydrocarbon monomers from which the S blocks of the thermally crosslinkable SBS block copolymers are derived may be, independently, any monovinylaromatic hydrocarbon monomer as previously described and, are preferably styrene.

The B block based on butadiene monomers used in the composition of the SBS block copolymers mentioned preferably consists solely of butadiene monomers, or of a mixture of butadiene comprising minor proportions of one or more other structurally related conjugated dienes, and in particular chosen from isoprene, 2,3-dimethyl-1 ,3-butadiene, 1,3-pentadiene and 1,3-hexadiene, in particular representing at most 10% by mass, relative to the total conjugated dienes present in block B. Preferably, the constituent monomers of block B are exclusively butadiene monomers.

In particular, the thermally crosslinkable SBS block elastomer used in the context of the invention has a weight-average molecular weight Mw ranging from 40,000 to 500,000 g/mol. Preferably, the thermally crosslinkable SBS block elastomer has a weight-average molecular mass Mw of less than or equal to 400,000 g/mol, more preferably less than or equal to 250,000 g/mol, even more preferably less than or equal to 200,000 g/mol and advantageously less than or equal to 150,000 g/mol.

Preferably, the SBS block copolymer used in the invention has a weight-average molecular mass Mw greater than or equal to 50,000 g/mol, more preferably greater than or equal to 65,000 g/mol, even more preferably greater than or equal to 75,000 g/mol, and advantageously greater than or equal to 100,000 g/mol. According to particular embodiments, the SBS block copolymer has a weight-average molecular weight Mw in any range corresponding to the maximum and minimum values mentioned above, and advantageously in the range from 100,000 to 150,000 g/mol.

As previously indicated, the SBS block copolymer used in the context of the invention has a content of pendant vinyl groups greater than or equal to 5 mol%, based on the total number of moles of monomer units in the copolymer. This vinyl content, determined by combining 13C NMR (carbon nuclear magnetic resonance) and 1H NMR (proton nuclear magnetic resonance) spectroscopy techniques, is used to characterize the polymer.

Preferably, the SBS block copolymer has a content of pendant vinyl groups greater than or equal to 5 mol%, based on the total number of moles of monomer units in the SBS copolymer, preferably greater than or equal to 10%.

According to one embodiment, the SBS block copolymer preferably has a content of pendant vinyl groups of less than or equal to 50 mol%, relative to the total number of moles of monomer units of the SBS copolymer, more preferably less than or equal to 40 mol%, even more preferably less than or equal to 30 mol%, typically less than or equal to 20 mol%.

Advantageously according to this first embodiment, the SBS block copolymer has a content of pendant vinyl groups in any range corresponding to the maximal and minimal values mentioned above, and advantageously in the range from 5 to 20 mol%.

According to a second embodiment, the SBS block copolymer used according to the invention preferably has a content of pendant vinyl groups greater than or equal to 25 mol%, relative to the total number of moles of monomer units of the SBS copolymer, more preferably greater than or equal to 30 mol%.

Preferably, according to this second embodiment, the SBS block copolymer used according to the invention preferably has a content of pendant vinyl groups of less than or equal to 50 mol%, relative to the total number of moles of monomer units of the SBS copolymer, more preferably less than or equal to 45 mol%. Advantageously according to this second embodiment, the SBS block copolymer has a content of pendant vinyl groups in any range corresponding to the maximal and minimal values mentioned above, and advantageously in the range from 35% to 45% by moles.

Preferably, the pendant vinyl groups are randomly distributed along the B block of the SBS polymer. This characteristic is a direct result of the process used to synthesise the copolymer.

The number of moles of monomer units of the S blocks present in the SBS block copolymer together represents at least 15% of the total number of moles of monomer units of the SBS copolymer, preferably at least 16% by mole.

Preferably, the number of moles of monomer units of the S blocks of the SBS polymer together represents from 15% to 50% by moles, relative to the total amount of moles of monomer units of the SBS block copolymer, more preferably from 16% to 30% by moles, even more preferably from 16% to 25% by moles, and advantageously from 16% to 20% by moles. The number of moles of monomer units in the S blocks of the SBS polymer can be determined by 13C NMR spectroscopy (Carbon Nuclear Magnetic Resonance).

Preferably, the content of monovinyl aromatic hydrocarbon monomer (advantageously styrene) in the SBS block copolymer, determined by 13C NMR spectroscopy (Nuclear Magnetic Resonance of carbon), is greater than or equal to 25% by mass, more preferably greater than or equal to 28% by mass, still more preferably greater than or equal to 30% by mass, relative to the total mass of the block copolymer of formula SBS.

Preferably, the content of monovinyl aromatic hydrocarbon monomer (advantageously styrene) in the SBS block copolymer, determined by 13C NMR spectroscopy (Nuclear Magnetic Resonance of carbon), ranges from 25% to 40% by mass, even more advantageously from 28% to 35% by mass, relative to the total mass of the SBS block copolymer.

Advantageously, the SBS block elastomers are in a non-hydrogenated form.

According to a particular embodiment, the block copolymer of formula SBS is obtained by coupling two block copolymers of formula S-B' in which the blocks S and B' are chosen to obtain an SBS block copolymer. Block B may therefore include a residue of a coupling agent, well known in the field in question. Examples of difunctional coupling agents include dibromoethane, diethyl adipate, divinylbenzene, dimethyldichlorosilane and methyl dichlorosilane.

Preferably, according to this particular embodiment, the coupling efficiency of the two block copolymers of formula S-B', measured by gel permeation chromatography, is greater than or equal to 50%, more preferably greater than or equal to 75%, even more preferably greater than or equal to 90% and advantageously greater than or equal to 95%.

Examples of SBS block copolymers that can be used in the compositions according to the invention, as well as their preparation processes, are described in particular in US patent 5,798,401, as well as in WO 2007/058994 and in WO 2011/013073.

In the polymer-modified bituminous compositions and processes according to the invention, it is possible to use a single SBS block copolymer as described within the scope of the invention is used, or that a mixture of SBS block copolymers as described within the scope of the invention is used, or that one or more SBS block copolymer(s) as described within the scope of the invention are used in combination with one or more other elastomers. According to a preferred variant, the matrix is made with only one or more, preferably only one, SBS elastomer. This or these elastomers preferably represent from 0.5 to 10% by mass, in particular from 1 to 6% by mass, and preferably from 1.5 to 4% by mass of the total mass of the polymer-modified bituminous composition. In the polymer-modified bituminous compositions according to the invention, the said elastomer(s) are in a crosslinked form, but this does not affect the percentage they represent within the composition. In other words, the percentages, before and after cross-linking, of the various components used to prepare the polymer-modified bituminous composition are identical. When a mixture of elastomers containing at least one elastomer other than the SBS elastomer as described in the context of the invention is used, the percentages of 0.5 to 10% by mass, in particular 1 to 6% by mass, and preferably 1.5 to 4% by mass given with respect to the total mass of the polymer-modified bituminous composition, correspond to the total quantity of elastomers used (SBS + other elastomer(s)). In this case of using a mixture of elastomers, containing at least one elastomer other than the SBS elastomers, the SBS elastomer represents at least 50%, preferably at least 70% by mass, and preferably at least 90% of the total quantity of elastomers used (SBS + other elastomer(s)).

Preferably, the SBS elastomer or elastomers represent at least 80% by mass of the total amount of elastomers, preferably at least 90% and preferably at least 95% of the total amount of elastomers present, if a mixture of elastomers is used to prepare the polymer-modified bituminous compositions according to the invention. In particular, it is possible for the mixture to contain a proportion of S-B' used during the manufacture of the SBS elastomer by coupling, as explained above.

Preferably, the additive combination of the invention comprises from 1% to 50% by mass of polymer, more preferably from 2% to 30% by mass, still more preferably from 5% to 20% by mass, relative to the total mass of the combination of the invention.

**Kit**

The present invention also concerns a kit for rejuvenating a polymer-modified bituminous composition comprising:

a) at least one rejuvenating oil, and
b) at least one chemical reactive agent as described above.

The rejuvenating oil is in particular as described above.

According to one embodiment, the kit further comprises c) at least one polymer as described above.

Preferably, the polymer is a "fresh polymer".

The present invention also concerns the use of the additive composition or of the kit as defined above for rejuvenating a polymer-modified bituminous composition.

**Method**

The present invention also concerns a method for rejuvenating an aged polymer-modified bituminous composition, said method comprising the following steps:

a) the preparation of a composition (C1) by mixing a rejuvenating oil with a polymer:

b) the curing of the composition (C1) by leaving it at rest, after which a composition (A) is obtained;

c) the addition of the chemical reactive agent as described above to an aged polymer-modified bitumen, after which a composition (B) is obtained;

d) the introduction of the composition A prepared in step a) into the composition B prepared in step c) to get the rejuvenated polymer modified bitumen.

Indeed, the inventors have also surprisingly discovered a process in which it is possible to fully restore the rheological and mechanical properties of an aged polymer-modified bituminous composition.

The method according to the invention consists in the preparation of two distinct rejuvenator components: composition A and chemical reactive agent.

Advantageously, the method according to the invention allows the preparation of a rejuvenating agent such as composition A without involving any bituminous material.

At step a), a first composition (C1) is prepared by mixing a rejuvenating oil with a polymer.

Preferably, the polymer is gradually introduced into the composition (C1).

The rejuvenating oil is in particular as defined above.

The polymer is in particular as defined above.

Preferably, the rejuvenating oil is selected from the group consisting of natural oils, petroleum-based hydrocarbon oils or synthetic hydrocarbon oils, and mixtures thereof. Advantageously, the rejuvenating oil is a mixture of a natural oil and a petroleum-based or synthetic hydrocarbon oil. More advantageously, the rejuvenating oil is a mixture of a natural oil, such as tall oil and/or rapeseed oil, and an aromatic oil.

Preferably, at step a), the resulting composition (C1) is mixed at a temperature ranging from 140°C to 190°C, preferably from 160°C to 180°C, and even more preferably at 170°C.

Preferably, at step a), an homogeneous mixing is applied, preferably the mixing rate applied to the composition (C1) is between 3000 rpm and 6000 rpm.

Advantageously, step a) is carried out for a duration from 20 min to 100 min, preferably from 30 min to 60 min to ensure that the polymer is evenly dispersed, to avoid lumps and enhance the mixture's properties.

According to one embodiment, the method according to the invention comprises a further step a2) consisting in the addition of a resinic compound to the composition (C1).

According to this embodiment, this step a2) is carried out after step a).

According to one embodiment, the method according to the invention comprises a further step a3) consisting in the addition of a rejuvenating oil, in particular a natural oil to the composition (C1). This step a3) is carried out after step a2).

Specifically, the rejuvenating oil in step a3) is added to decrease the viscosity of the composition (C1). Without being bound to any theory, reducing viscosity enhances workability and improves the interaction between the rejuvenator and the aged polymer-modified bitumen.

Preferably, at step a3), the natural oil added is chosen from rapeseed oil, tall oil, and mixtures thereof.

According to one embodiment, step a) comprises a further step a4) in which at least one terpene compound is added to the composition (C1) under stirring. Step a4) is generally carried out after step a3).

Preferably, the content of terpene(s) in the composition (C1) is less than 2% by weight, preferably from 0.2% to 0.7% by weight and more preferably from 0.35% to 0.50% by weight, in relation to the total weight of said additive composition.

Preferably, the content of resin(s) in the composition (C1) is less than 2% by weight, preferably from 0.2% to 1% by weight and more preferably from in relation to the total weight of said additive composition.

Preferably, the terpene compound is selected from pinene, turbentin, and mixtures thereof.

Preferably, steps a2), a3) and a4) are carried out at the same temperature as step a).

Preferably, at steps a2), a3) and a4), an homogeneous mixing is applied, preferably the mixing rate applied is between 500 rpm and 1000 rpm.

The method according to the invention comprises a step b) consisting in curing of the composition (C1) by leaving it at rest in order to obtain the composition (A).

Preferably, at step b), a homogeneous mixing is applied to composition (C1), said homogeneous mixing being applied at a mixing rate between 250 rpm and 1500 rpm, preferably between 500 rpm and 1000 rpm.

More preferably, the mixing rate applied on step b) needs to be lower than the mixing rate applied in step a) or in any steps carried out before step b).

According to one embodiment, step b) is carried at a temperature ranging from 140°C to 190°C, preferably from 160°C to 180°C, and even more preferably at 170°C.

Advantageously, step b) is carried out for a duration from 60 min to 180 min, preferably from 90 min to 120 min.

The duration of step b) is thus limited to avoid side reactions between the various reagents included in the composition (C1) and the formation of undesirable products.

The method according to the invention comprises a step c) consisting the addition of a chemical reactive agent as described above to the aged polymer modified bitumen, after which a composition (B) is obtained.

The method according to the invention comprises after which a rejuvenated polymer-modified bituminous composition (B) is obtained.

According to one embodiment, the content of chemical reactive agent introduced into composition at step c) is from 0.01 % by weight to 1% by weight, in relation to the total weight of the composition, preferably from 0.05% to 0.7%, and more preferably from 0.1% to 0.5%.

Preferably, at step c), the resulting composition (B) is mixed at a temperature ranging from 120°C to 150°C, and more preferably at 140°C. Preferably, at step c), an homogeneous mixing is applied, preferably the mixing rate applied to the composition (C1) is between 3000 rpm and 6000 rpm.

Advantageously, step c) is carried out for a duration from 1 min to 5 min, preferably stec c) is carried out for 3 min.

The method according to the invention further comprises a step d) consisting in introducing composition (A) prepared in a) into the composition (B) prepared in c) to get the rejuvenated polymer modified bitumen.

According to another embodiment, the method according to the invention is applied to aged polymer-modified bituminous compositions, specifically those found in recycled asphalt pavement (RAP).

The integration of RAP in new asphalt mixtures not only reduces the need for virgin materials but also contributes to sustainable construction practices by minimizing waste and conserving natural resources.

By "Reclaimed Asphalt Pavement" (RAP), it is meant a material obtained from the milling, removal, or processing of existing asphalt pavements. This material consists of a mixture of aged asphalt binder and aggregates, which are recovered during the reconstruction, resurfacing, or removal of asphalt pavement structures. The reclaimed material is then processed by crushing and screening to meet specific gradation requirements, allowing it to be reused in new asphalt mixtures or other applications.

In the context of the present invention, RAP serves as a source of aged polymer-modified bituminous compositions, which can be rejuvenated and recycled using the method described herein.

According to this embodiment, step c) is carried at a temperature ranging from 120°C to 140°C.

According to the same embodiment, the method according to the invention further comprises a step c') consisting heating fresh aggregate at a temperature of 220°C to ensure temperature uniformity.

According to this specific embodiment, the method further comprises a step d') consisting in the introduction of the fresh aggregate prepared in step c') and fresh polymer modified bituminous composition into the resulting mixture prepared at step d). Step d') is generally carried out after step d) under the same conditions.

The terms "aggregate" refers to the granular materials that are combined with asphalt binder in the composition of asphalt pavement. These materials include, but are not limited to, crushed stone, gravel, sand, and other mineral particles of varying sizes.

## Examples

### I. Raw material

### 1.1 PMB and Aging Process of SBS Polymer Modified Bitumen

The binders were firstly subjected to short-term aging with Rolling Thin Film Oven Test (TFOT) (EN12593), and subsequently conducted long-term aging in a Pressure Aging Vessel (PAV) (EN14769) for 80 hours.

### 1.2. Additives in the rejuvenator

The following materials are used to prepare the different rejuvenation composition:

- SBS Polymer: Linear SBS polymer is selected with commercial code Kraton linear SBS 1101;

- Synthetic oil: Petroleum based aromatic extract oil is used, in which the aromatic component is 30%;

- Terpene: A commercial turpentine named De GAMMA Eco-Terpentine provided by Gamma;

- Chemical reactive agent: Isocyanic acid, polymethylenepolyphenylene ester (P-MDI)

- Resin: Petroleum based C5 resin

- Bio-oil: Tall oil from Kraton named SYLVAROAD™ RP1000.

### 1.3. Aggregate materials

To replicate field recycling conditions, 60% RAP is chosen for the mixture. A target gradation is set according to requirement for the top layer of the PA-8 double-layer porous asphalt.

The Polymer modified bitumen content is specified at 5.4%, with air voids controlled at 20%.

The bulk specific gravities of fresh aggregates used are listed in table 1. Table 1.

| Aggregate size (mm | 22.4 - 16 | 16 - 11.2 | 11.2 - 8 | 8 - 5.6 | 5.6 - 2 | 2 - 0.063 | Filler |
|---|---|---|---|---|---|---|---|
| Specific gravity | 2.686 | 2.686 | 2.678 | 2.670 | 2.673 | 2.658 | 2.638 |

### II. Preparation of the rejuvenation compositions

The rejuvenation compositions are prepared using the content specified for each component in Table 2.

Table 2

| | CB1 | CB2 | CB3 | CC1 | CC2 | CC3 |
|---|---|---|---|---|---|---|
| Synthetic oil (%wt) | 22 | 21 | 21 | 25 | 22.4 | - |
| Bio-oil (%wt) | 66 | 63 | 62 | 75 | 67.2 | - |
| Terpenes (%wt) | 0.4 | 0.4 | 0.4 | - | 0.015 | - |
| Resin (%wt) | 0.9 | 0.8 | 0.8 | | | |
| Polymer (%wt) | 9 | 8 | 8 | - | 9 | - |
| Chemical reactive agent (%wt) | 2 | 6 | 8 | - | - | 100 |

The compositions CB1, CB2 and CB3 according to the invention combine oil-based rejuvenator, fresh SBS polymer and chemical additive.

The comparative composition CC1 is an oil-based rejuvenator comprising only an aromatic oil and a natural-based oil.

The comparative composition CC2 is an Oil-Based Rejuvenator with fresh SBS polymer.

The comparative composition CC3 only comprises a chemical reactive agent.

The rejuvenation compositions according to the invention are composed of two separate components due to the reactive nature of isocyanate.

Component A includes the rejuvenating oil, SBS polymer, and other additives, while the chemical reactive agent is an isocyanate. This separation is necessary to prevent premature reactions between isocyanate and the other ingredients in Component A.

Component A is prepared according to the following protocol:

Aromatic Oil and Bio Oil are blended at 170°C until the mixture is homogeneous. Fresh SBS polymer is then introduced into the oil blend using a high-speed shear mixer operating at 3000 rpm and 170°C. This mixing continues for 20 to 40 minutes to ensure thorough integration.

Resin is then added to the mixture under the same conditions for 5 to 20 minutes to enhance the compatibility of the mix.

Turpentine (or limonene) is incorporated into the blend from Step 3, continuing the high-speed shear mixing at 3000 rpm and 170°C for an additional 4 to 20 minutes.

The final mixture is then cured at a reduced speed of 500 rpm for 60 to 120 minutes at 170°C to stabilize the blend and optimize its properties.

### III. Evaluation of the performance of recycled PMB

The aged SBS Polymer Modified Bitumen was then treated with the various rejuvenation compositions previously described, and the performance was evaluated using the tests outlined below.

### 1. Application of Rejuvenator according to the invention on aged PMB Binder

The rejuvenator compositions according to the invention are applied on aged PMB binder according to the following protocol:

- The aged PMB binder is heated to 170°C.
- The chemical reactive agent is introduced into the heated PMB, blending it until homogeneous for 1 to 5 minutes.
- Then Component A is added to the blend, ensuring homogeneity over another 1 to 5 minutes.

**2. Evaluation of the recycled PMB binder**

The recycled polymer-modified bitumen were evaluated according to the following protocols described below.

*- High temperature performances (MSCR)*

The rheological high temperature properties were evaluated with MSCR tests. The MSCR tests were conducted on DSR using a spindle with 25 mm diameters and a gap of 1 mm between the parallel plates at 70°C, according to AASHTO TP 70-13. During the testing, the sample was subjected to stresses of 0.1 KPa and 3.2 KPa, respectively, for 1 second before receiving 9 seconds to recover. The tests were executed 30 times, and the specification described above was used to compute the average percent recovery R.
The average percent recovery (R) for an unaged polymer-modified bitumen is greater than or equal to 92%. In contrast, the average percent recovery (R) for an aged PMB is below 38%.

*- Low temperature Performances (creep-relaxation tests)*

The low temperatures performance of PMB were evaluated with creep-relaxation tests.
At 0°C temperature, the creep-relaxation tests were carried out on DSR using a spindle with 8 mm diameters and parallel plates with 2 mm spacing. In a couple of seconds (0.1s), the samples were subjected to 1% shear strain, followed by a 100-second relaxation period. The shear stresses of the samples were measured throughout the test, and as the relaxation rate accelerated quickly at the beginning of the test, the data collection frequency was set at a rate of 100 points per second.
The maximum shear stresses for an unaged polymer-modified bitumen is estimated at $4.1*10^5$ Pa. In contrast, the maximum shear stresses for an unaged polymer-modified bitumen is $4.7*10^5$.

*- Fatigue Life performance (Linear Amplitude Sweep Test)*

The LAS tests were performed to evaluate the fatigue life performance of recycled PMB. The fatigue life of rejuvenated bitumen samples under a 2.5% applied strain highlight various effect of rejuvenating agents on the material's durability. Tests were performed on DSR using a spindle with 8 mm diameters and parallel plates with 2 mm spacing at 20°C temperature, according to AASHTO TP 101-14. The tests were divided into two sections: frequency sweep and amplitude sweep. In order to determine the damage analysis parameter $\alpha$, the samples were given 0.1% strain over a frequency range of 0.2 - 30 Hz during the frequency sweep phase. At the amplitude sweep phase, the applied strain was linearly increased from 0 to 30% while the frequency was set at 10Hz. The calculation of the LAS results adhered to the aforementioned standard.
The number of cycles until the bituminous binder can no longer withstand additional loads without experiencing permanent deformations is evaluated. For an aged PMB, the average maximal of cycle is estimated at 3398 cycles. In contrast, the average number of cycle for an unaged PMB is 4620.

**3. Results**

The results for the different tests are summarized in Table 3 below.

Table 3

| | CB1 | CB2 | CB3 | CC1 | CC2 | CC3 | Aged PMB | Unaged PMB |
|---|---|---|---|---|---|---|---|---|
| **Average percent recovery R (%)** | 22 | 72 | 94 | 1 | 14 | 94 | **38** | **92** |
| **Maximum shear stress (Pa)** | $2.5*10^5$ | $2.1*10^5$ | $2.7*10^5$ | $1.4*10^5$ | $2.1*10^5$ | $6.5*10^5$ | **$4.7*10^5$** | **$4.1*10^5$** |

(continued)

| | CB1 | CB2 | CB3 | CC1 | CC2 | CC3 | Aged PMB | Unaged PMB |
|---|---|---|---|---|---|---|---|---|
| **Fatigue Life at 2.5% applied strain (cycles)** | 5097 | 7754 | 6167 | 4622 | 5571 | 3038 | **3398** | **4620** |

The results shows that recycled PMB treated with rejuvenation compositions CB1, CB2, and CB3 according to the invention exhibit improved properties compared to aged PMB and meet the performance criteria of unaged PMB.

In contrast, aged PMB treated with comparative compositions CC1 and CC2 show R-values that are poorer than those of untreated aged PMB, indicating they were unable to effectively restore the polymer network.

Furthermore, aged PMB treated with comparative composition CC3, which includes only the chemical reactive agent, exhibits significantly higher maximum shear stress compared to both unaged and aged PMB. This shows a potential compromise in its low-temperature performance. Moreover, the fatigue life performance is recorded at 3038 cycles, which is lower than aged PMB.

As a result, integrating chemical and physical rejuvenation methods optimizes the rejuvenation process, allowing aged PMB to be restored closely to its original state. This extends its service life and improves its effectiveness in road construction.

### IV. Evaluation of the performance in aged PMB Mixture

The various rejuvenation compositions previously described were then applied on aged PMB mixture and their performance were evaluated using the tests outlined below.

### 1. Application of Rejuvenator in Aged PMB Mixture

These rejuvenation compositions, according to the invention, are subsequently used directly in field conditions where pavement is commonly recycled from RAP into asphalt mixtures and utilized in road construction according to the specified protocol:

- The RAP is heated to a consistent temperature of 120 to 140°C. Simultaneously, the fresh aggregate is heated to 220°C to ensure temperature uniformity.
- The RAP is blended with a specific amount of chemical reactive agent to achieve a homogeneous mixture.
- Component A is then incorporated into the mix and blend at 120 to 140°C until homogeneous.
- The fresh aggregate is added to the blend at temperatures between 170 to 190°C, ensuring homogeneity within the same blending durations.
- Finally, fresh PMB is blended with the aggregate mixture from under the same conditions, ensuring a uniform final mixture.

The mixture produced is then suitable for field application, contributing to efficient and sustainable pavement construction.

### 2. Evaluation methods of recycled PMB mixture

The recycled polymer-modified bitumen mixture were evaluated according to the following protocols described below.

### - Cantabro tests

Cantabro tests were performed with the Los Angeles testing machine without the steel balls. The percentage of weight loss (Cantabro loss) can be used to characterize the mixture samples' ravelling resistance and durability.

At room temperature, the mixture sample was placed into the testing machine and the machine was rotated at a speed of 30 - 33 revolutions per minute for 300 revolutions. The sample weight before and after the test was recorded and the Cantabro loss can be calculated with the following equation:

$$CL = \frac{A - B}{A} \times 100$$

where CL is the Cantabro loss (%), A is the sample weight before test and B is the sample weight after test.

*- Indirect tensile strength ratio (ITSR)*

The indirect tensile strength ratio or ITSR is conducted based on the NEN-EN 12697-12: 2018 standard, it can be used to express the moisture resistance of the asphalt mixtures.

The cylindrical asphalt mixture specimens were first placed on the perforated shelf in the vacuum container which was filled with water, then a vacuum was applied to the container and maintained for 30 minutes. After that the specimens were transported to a water bath at 40°C for a period of 72 hours. Before the test, the wet specimens were water bathed at 25°C to make them have the same temperature as the dry specimens. IDEAL-CT is also performed on wet specimens, and since the peak force is recorded, the indirect tensile strength or ITS can be calculated with the equation:

$$ITS = \frac{2P}{\pi DH} \times 1000$$

where $P$ is the peak load, $D$ is the diameter of the specimen and $H$ is the height of the specimen. 1000N/mm

The indirect tensile strength ratio, ITSR, can be calculated with the equation

$$ITSR = 100 \times \frac{ITS_w}{ITS_d}$$

where $ITS_w$ is the average indirect tensile strength of the wet specimen group and $ITS_d$ is the average indirect tensile strength of the dry specimen group.

The standard requirement for an unaged PMB mixture is 80%.

### 3. Results

The results for the different tests are summarized in Table 4 below.

Table 4

|  | CB1 | CB2 | CB3 | CC1 | CC2 | CC3 | Aged PMB | Unaged PMB |
|---|---|---|---|---|---|---|---|---|
| **Cantabro loss (%)** | 6.52 | 4.68 | 4.87 | 18.63 | 14.32 | 5.21 | **20.53** | **4** |
| **ITSR (%)** | 68.3 | 78.3 | 85.6 | 64.9 | 72.3 | 52.3 | - | - |

The results indicate that recycled PMB mixtures treated with rejuvenation compositions CB1, CB2, and CB3, as per the invention, exhibit enhanced properties compared to aged PMB and meet the performance criteria of unaged PMB. Notably, they show a Cantabro loss close to 4% and ITSR values near the required standard.

In contrast, aged PMB mixture treated with comparative compositions CC1, CC2 exhibit respectively ITSR values of 64.9% and 72.3% showing a good moisture resistance. However, both CC1 and CC2 show Cantabro losses of 18.62% and 14.32%, which shows a defect on durability and long-term performance.

Moreover, aged PMB treated with the comparative composition CC3, which contains only the chemical reactive agent, shows an ITSR of 52.3%, indicating a lower moisture resistance.

These results shows that the rejuvenation composition according to the invention optimize both the mechanical properties and the moisture resistance of recycled asphalt, ensuring both durability and performance in the long term.

### Claims

1. An additive composition for rejuvenating a polymer-modified bituminous composition, said additive composition comprising:

a) at least one rejuvenating oil;
b) at least one polymer, preferably one elastomer, and more preferably one crosslinked elastomer; and
c) at least one chemical reactive agent carrying at least one functional group chosen from the group consisting of isocyanate and epoxide functions.

2. The additive composition according to claim 1, wherein the rejuvenating oil is chosen from the group consisting of:

   i) natural oils, possibly modified or functionalized;
   ii) mineral hydrocarbon oils, in particular petroleum-based, or synthetic hydrocarbon oils; and
   iii) mixtures of i) and ii).

3. The additive composition according to claim 1 or 2, comprising at least one natural oil and at least one petroleum-based or synthetic hydrocarbon oil.

4. The additive composition according to any one of claims 1 to 3, wherein the rejuvenating oil is a natural oil chosen from the group consisting of plant-based oils, animal-based oils, tall oils, and mixtures thereof.

5. The additive composition according to any one of claims 1 to 4, wherein the rejuvenating oil is a petroleum-based or synthetic hydrocarbon oil chosen from the aromatic mineral oils.

6. The additive composition according to any one of claims 2 to 4, wherein the content of natural oil is from 30% to 70% by weight, preferably from 40% to 65% by weight, and more preferably from 55% to 65% by weight, in relation to the total weight of said additive composition.

7. The additive composition according to any one of claims 3 or 6, wherein the content of the petroleum-based or synthetic hydrocarbon oil is from 10% to 50% by weight, preferably from 15% to 45% by weight, more preferably from 15% to 25% by weight, in relation to the total weight of said additive composition.

8. The additive composition according to any one of claims 1 to 7, wherein the chemical reactive agent is chosen from the aromatic isocyanates or polyisocyanates.

9. The additive composition according to any one of claims 1 to 8, wherein the chemical reactive agent is an aromatic isocyanate, preferably the chemical reactive agent is an isocyanic acid polymethylenepolyphenylene ester.

10. The additive composition according to any one of claims 1 to 9, wherein the content of the chemical agent is from 0.01 % to 1%, preferably from 0.05% to 0.7%, and more preferably from 0.1% to 0.5% by weight, in relation to the total weight of said additive composition

11. The additive composition according to any of claims 1 to 10, wherein the polymer is chosen from the copolymers of a monovinyl aromatic hydrocarbon and a conjugated diene.

12. A kit for rejuvenating a polymer-modified bituminous composition comprising:

    a) at least one rejuvenating oil, and
    b) at least one chemical reactive agent according to any one of claims 1 to 8

13. The kit according to claim 12 further comprising c) at least one polymer according to claim 1 or 11.

14. A method for rejuvenating an aged polymer-modified bituminous composition, comprising the following steps:

    a) the preparation of a composition (C1) by mixing a rejuvenating oil with a polymer:
    b) the curing of the composition (C1) by leaving it at rest, after which a composition (A) is obtained;
    c) the addition of a chemical reactive agent according to any one of claims 1 to 8 to an aged polymer modified bitumen, after which a composition (B) is obtained.
    d) the introduction of the composition (A) prepared in step a) into the composition (B) prepared in step c) to get the rejuvenated polymer modified bitumen.

15. The method according claim 14, wherein at step c), the content of chemical reactive agent introduced is from 0.01 % by weight to 1% by weight, preferably from 0.05% to 0.7%, and more preferably from 0.1% to 0.5%, in relation to the total weight of the composition.

16. The use of a composition according to any one of claims 1 to 11 or of the kit of claim 12 or 13, for rejuvenating a polymer-modified bituminous composition.

Europäisches
Patentamt

European
Patent Office

Office européen
des brevets

# EUROPEAN SEARCH REPORT

**Application Number**

EP 24 30 6355

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP H05 320641 A (CIBA GEIGY AG) 3 December 1993 (1993-12-03) * example 2 * | 1,2,5, 10,11 | INV. C08L91/00 |
| X | WO 2019/165396 A1 (FULLER H B CO [US]) 29 August 2019 (2019-08-29) * examples A2,B2,C2 * | 1,2,5, 7-9,11 | |
| X | CN 116 875 067 A (GANSU ROAD ENG QUALITY TEST DETECTION CENTER CO LTD ET AL.) 13 October 2023 (2023-10-13) * claim 1; examples 1-3 * | 1-11 | |

**TECHNICAL FIELDS SEARCHED (IPC)**

C08L

The present search report has been drawn up for all claims

| Place of search | Date of completion of the search | Examiner |
|---|---|---|
| Munich | 15 January 2025 | Rouault, Yannick |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

Europäisches
Patentamt

European
Patent Office

Office européen
des brevets

**Application Number**

EP 24 30 6355

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-11

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

The Search Division considers that the present European patent application does not comply with the requirements of unity of invention and relates to several inventions or groups of inventions, namely:

1. claims: 1-11

   An additive composition for rejuvenating a polymer-modified bituminous composition, said additive composition comprising:a) at least one rejuvenating oil;b) at least one polymer, preferably one elastomer, and more preferably one crosslinked elastomer; andc) at least one chemical reactive agent carrying at least one functional group chosen from the group consisting of isocyanate and epoxide functions.
   ---

2. claims: 12-16

   A kit for rejuvenating a polymer-modified bituminous composition comprising the following unmixed products:
   a) at least one rejuvenating oil, and
   b) at least one polymer
   c) at least one chemical reactive agent carrying at least one functional group chosen from the group consisting of isocyanate and epoxide functions
   ---

## ANNEX TO THE EUROPEAN SEARCH REPORT
## ON EUROPEAN PATENT APPLICATION NO.

EP 24 30 6355

This annex lists the patent family members relating to the patent documents cited in the above-mentioned European search report.
The members are as contained in the European Patent Office EDP file on
The European Patent Office is in no way liable for these particulars which are merely given for the purpose of information.

15-01-2025

| Patent document cited in search report | | Publication date | Patent family member(s) | | Publication date |
|---|---|---|---|---|---|
| JP H05320641 | A | 03-12-1993 | AU | 660203 B2 | 15-06-1995 |
| | | | BR | 9204852 A | 08-06-1993 |
| | | | CA | 2084588 A1 | 07-06-1993 |
| | | | CN | 1073460 A | 23-06-1993 |
| | | | EP | 0545865 A2 | 09-06-1993 |
| | | | ES | 2084328 T3 | 01-05-1996 |
| | | | HK | 1004754 A1 | 04-12-1998 |
| | | | JP | 3113958 B2 | 04-12-2000 |
| | | | JP | H05320641 A | 03-12-1993 |
| | | | KR | 930012927 A | 21-07-1993 |
| | | | RU | 2109027 C1 | 20-04-1998 |
| | | | TW | 222293 B | 11-04-1994 |
| | | | US | 5276258 A | 04-01-1994 |
| | | | ZA | 929420 B | 07-06-1993 |
| WO 2019165396 | A1 | 29-08-2019 | CN | 110194940 A | 03-09-2019 |
| | | | WO | 2019165396 A1 | 29-08-2019 |
| CN 116875067 | A | 13-10-2023 | NONE | | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5798401 A
- WO 2007058994 A
- WO 2011013073 A

**Non-patent literature cited in the description**

- *CHEMICAL ABSTRACTS*, 8016-81-7